(19)

Europäisches
Patentamt
European
Patent Office
Office européen
des brevets

(11) **EP 2 264 481 A1**

(12) **EUROPEAN PATENT APPLICATION**

(43) Date of publication:
**22.12.2010 Bulletin 2010/51**

(21) Application number: **09161959.3**

(22) Date of filing: **04.06.2009**

(51) Int Cl.:
*G01S 7/497* (2006.01)  *G01S 17/89* (2006.01)
*G01S 17/36* (2006.01)

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(71) Applicant: **IEE International Electronics & Engineering S.A.**
**6468 Echternach (LU)**

(72) Inventors:
• **Lamesch, Laurent**
  **4881 Lamadelaine (LU)**
• **Franke, Michael**
  **01127 Dresden (DE)**
• **Werner, Jörg**
  **01309 Dresden (DE)**

(74) Representative: **Office Freylinger**
**P.O. Box 48**
**8001 Strassen (LU)**

(54) **Method and device for acquiring a range image**

(57)    The method uses a range camera operating according to the time-of-flight principle. Such camera comprises an illumination unit, a one- or two-dimensional array of lock-in pixels, an optical system for imaging the scene onto the array of lock-in pixels, and at least one reference lock-in pixel for receiving light from the illumination unit via a reference light path. The method comprises a measurement procedure during which a range image of a scene is acquired and a calibration procedure during which a calibration function is determined which is used in the measurement procedure to compensate for distortions induced in the response signals due to system nonlinearities.

**Fig. 2**

EP 2 264 481 A1

## Description

### Technical field

The present invention relates to a range imaging system operating according to the time-of-flight principle.

### Background Art

Systems for creating a range image of a given portion of space have a variety of potential applications in many different fields. Examples are automotive sensor technology (e.g. vehicle occupant detection and classification), robotic sensor technology (e.g. object identification) or safety engineering (e.g. plant monitoring) to name only a few. As opposed to conventional 2-D imaging, a range imaging system requires depth information about the target scene. In other words, the distances between one or more observed objects and an optical receiver of the system need to be determined. A well-known approach for distance measurement, which is used e.g. in radar applications, consists in timing the interval between emission and echo-return of a measurement signal. This so called time-of-flight (TOF) approach is based on the principle that, for a signal with known propagation speed in a given medium, the distance to be measured is given by the product of the propagation speed and the time the signal spends to travel back and forth.

In case of optical imaging systems, the measurement signal consists of light waves. For the purposes of the present description, the term "light" is to be understood as including visible, infrared (IR) and ultraviolet (UV) light.

Distance measurement by means of light waves generally requires varying the intensity of the emitted light in time. The TOF method can e.g. be using the phase-shift technique or the pulse technique. In the phase-shift technique, the amplitude of the emitted light is periodically modulated (e.g. by sinusoidal modulation) and the phase of the modulation at emission is compared to the phase of the modulation at reception. In the pulse technique, light is emitted in discrete pulses without the requirement of periodicity. In phase-shift measurements, the modulation period is normally in the order of twice the difference between the maximum measurement distance and the minimum measurement distance divided by the velocity of light. In this approach, the propagation time interval is determined as phase difference by means of a phase comparison between the emitted and the received light signal. Such phase comparison requires synchronization of the demodulation signal with the emitted light signal. Due to the high propagation speed given by the velocity of light, a fundamental difficulty encountered in distance measurements based on the pulse technique or the phase-shift technique resides in the required temporal resolution of the measurement device. In fact, a spatial resolution in the order of centimetres requires a temporal resolution in the order of $10^{-11}$ seconds (10 ps). The principles of range imaging based upon time-of-flight measurements are described in detail in EP 1 152 261 A1 (to Lange and Seitz) and WO 98/10255 (to Schwarte). A more detailed description of the technique can be found in Robert Lange's doctoral thesis "3D Time-of-Flight Distance Measurement with Custom Solid-State Image Sensors in CMOS/CCD-Technology" (Department of Electrical Engineering and Computer Science at University of Siegen).

With both the pulsed light and phase shift methods, time intervals are generally measured in the electrical domain. Therefore, electric propagation times and delays have a determining influence on the measurement accuracy. Problems in this respect are unknown variations and drifts of the electric propagation times on the signal lines and of the delays in the electronic components. For instance, there may be variations between devices of the same type occur, for example because of tolerances in the production processes (e.g. semiconductor production). Additionally, drifts may occur during operation, e.g. due to temperature variations or component ageing. These variations and drifts have a detrimental influence on measurement accuracy.

As a result, efforts have been made to overcome, for example by Schwarte in WO98/10255, to provide an optical feedback path from the light emitting module to one or more sensor cells of the light receiving camera. As shown in DE 44 39 298 by Schwarte, a phase reference for synchronization purposes can be obtained by guiding the emitted light without reflection to the receiver e.g. through an optical fibre.

An improved range imaging system has been proposed in WO 2006/097406. This document discloses a range imaging system comprising an illumination unit for emitting light into a scene and an imaging sensor for imaging the scene by detecting scattered light. The system also comprises an evaluation unit, for determining distance information related to the scene on the basis of light propagation time, and synchronization means for providing synchronization information to the evaluation unit. To overcome the above-mentioned drawbacks, the synchronization means comprises means for generating an electrical reference signal in the illumination unit, the reference signal being directly derived from the emitted light.

A further improved variant of the range imaging system of WO 2006/097406 has been proposed in WO 2008/034738. According to this document, the reference phase is provided as an average of the modulation phases of the parts of modulated light emitted by the different light emitting devices.

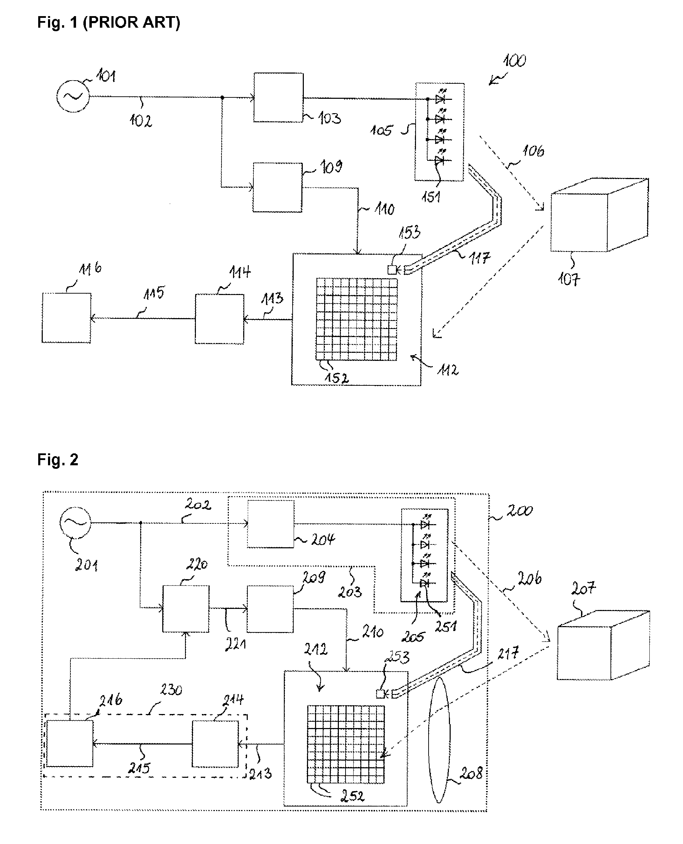

Figure 1 depicts a range camera 100 according to the prior art. Signal source 101 generates a modulation signal 102 on its output node. Illumination driver 103 amplifies the modulation signal to drive the illumination module 105 consisting of several individual light emitting devices 151. The illumination module emits an intensity-modulated light wave 106, which is directed into the scene to be imaged. Object 107 in the scene scatters part of the light back onto the array 112 of lock-in pixel sensor cells 152 (hereinafter referred to as lock-in pixels, to shorten the notation). Each lock-in pixel 152 is at the same time fed with a demodulation signal 110, which is derived from the modulation signal 102 by the photo gate driver 109. Under the control of the demodulation signal 110, each lock-in pixel 152 integrates the charge generated therein by the impinging light during at least three time intervals, each of which corresponds to a different phase within one period of the modulation signal. Each lock-in pixel 152 provides response signals 113 indicating the integrated charge for the different time intervals. This raw phase information is sometimes referred to as "tap values" or "tap responses" according to the nomenclature of Robert Lange's doctoral thesis.

To simplify computation of the phase difference between the received light and the modulation signal, one normally chooses four integration intervals corresponding to phases separated by 90°. For each pixel, one thus retrieves four tap values (called A0, A1, A2, A3 from now on) per picture taken. The tap values are converted into phase information 115 by the phase calculation unit 114. With four tap values, the phase difference φ is calculated as follows:

$$\varphi = \operatorname{atan2}(A3 - A1, A2 - A0) \qquad\qquad (\text{eqn. 1})$$

where atan2(x,y) is the four-quadrant inverse tangent function, yielding the angle between the positive x-axis of a plane and the point with coordinates (x, y) on that plane. For offset compensation, the range camera comprises a reference lock-in pixel 153 receiving the modulated light from the illumination module 105 via a reference light path (provided by light guide 117). As the length of the reference light path is known, the phase difference computed with the tap responses from the reference lock-in pixel can be used to determine a global offset (i.e. common to all lock-in pixels). Phase drifts due to ageing of the illumination unit or to changing ambient temperature can thus be compensated. Calculation unit 114 is preferably a digital circuit, for example a digital ASIC (application specific integrated circuit) or an FPGA (field programmable gate array). Control unit 116, which is preferably a microcontroller, processes the distance information further to, for example, extract object characteristics.

**Technical problem**

It is an object of the present invention to improve the accuracy of a range image of a scene acquired with a range camera operating according to the time-of-flight principle. This object is achieved by a method as claimed in claim 1 or a range camera according to claim 7.

**General Description of the Invention**

The method according to the invention uses a range camera operating according to the time-of-flight principle. Such range camera comprises an illumination unit, a one- or two-dimensional array of lock-in pixels, an optical system for imaging the scene onto the array of lock-in pixels, and at least one reference lock-in pixel for receiving light from the illumination unit via a reference light path. The method comprises a measurement procedure (during which a range image of a scene is acquired) and a calibration procedure. The measurement procedure includes the steps:

o feeding an oscillating modulation signal to the illumination unit (e.g. a bank of light-emitting diodes and an LED driver) to cause the illumination unit to illuminate the scene with intensity-modulated light;

o imaging a part of the scene onto a lock-in pixel by making intensity-modulated light emitted by the illumination unit and scattered in the part of the scene impinge onto the lock-in pixel;

o integrating charge induced in the lock-in pixel by the impinging light during at least a first, a second and a third time interval corresponding to at least a first, a second and a third phase of the modulation signal, respectively, and providing at least at least a first, a second and a third response signal (tap response) indicative of the charge integrated during the corresponding one of the at least first, second and third time intervals;

o mapping the response signals onto a phase measurement quantity indicative of a phase difference between the intensity-modulated light impinging onto the lock-in pixel and the modulation signal; and

o deriving a distance value indicative of the distance between the lock-in pixel and the part of the scene imaged thereon.

According to the invention, the distance value is derived while compensating for distortions induced in the response signals due to system non-linearities by mapping the phase measurement quantity onto the distance value using a calibration function computed in the calibration procedure.

The calibration procedure includes the steps:

  o illuminating the reference lock-in pixel with light travelling via the reference light path from the illumination unit to the reference lock-in pixel;

  o clocking the reference lock-in pixel using a copy of the oscillating modulation signal, the modulation signal copy having an adjustable phase shift with respect to the oscillating modulation signal;

  o sequentially adjusting the phase shift to different preset phase-shift values;

  o for each of the preset values:

  - while the phase shift is adjusted to that phase-shift value, integrating charge induced in the reference lock-in pixel by the impinging light during at least a first, a second and a third time interval corresponding, respectively, to at least a first, a second and a third phase of the modulation signal copy, and providing at least at least a first, a second and a third reference response signal (tap response of the reference lock-in pixel) indicative of the charge integrated in the reference lock-in pixel during the corresponding one of these time intervals;

  - mapping the reference response signals onto a reference phase measurement quantity indicative of a phase difference between the intensity-modulated light impinging onto the reference lock-in pixel and the modulation signal copy;

  o and computing the calibration function based upon the different preset phase-shift values and the reference phase measurement quantities derived for these preset phase-shift values.

Those skilled will appreciate that, during the calibration procedure, different phase shifts are induced between the clocking signal of the reference lock-in pixels and the modulation of the emitted light. Ideally (i.e. in the absence of non-linearities of the system), the reference phase measurement quantity returned by the reference lock-in pixel would indicate the respective set phase shift (after subtraction of a global offset, i.e. common to all preset phase shifts). In the presence of system non-linearities, however, one notes that the phase measurement quantity returned by a lock-in pixel does not depend on the phase shift in a strictly linear fashion. Accordingly, for high-accuracy applications, it is not sufficient to withdrawn a global offset from each phase measurement quantity, but a compensation needs to be applied that takes into account the non-linear dependency of the phase measurement quantity upon the actual phase difference.

Preferably, the calibration procedure is carried out regularly, e.g. after each start-up of the range camera, at predetermined time intervals or after a predetermined number of range images have been acquired (i.e. after the measurement procedure has been carried out that number of times).

The different preset phase-shift values are preferably distributed over a full cycle (0° to 360°). The preset phase-shift values may be regularly distributed over a full cycle, e.g. with spacings of 30°, 20°, 10° or any other suitable value. It should be noted, however, that equidistant preset phase-shift values are not compulsory. The distribution of the preset phase-shift values over a cycle could e.g. be made dependent on the rate of change of the non-linear error: in this case, one would have a locally denser distribution of the preset phase-shift values where the rate of change of the non-linear error is higher and a locally less dense distribution where the rate of change is lower.

The computed calibration function is preferably implemented so as to map each reference phase measurement quantity to the preset phase-shift value for which that reference phase measurement quantity has been derived. According to a preferred embodiment of the invention, this may be achieved by means of a look-up table. As an alternative to a look-up table, the control unit could e.g. determine from the recorded reference phase measurement quantities the parameters of a polynomial expression or other mathematical function that correct for system non-linearities. The use of a look-up table may, however, be computationally more efficient.

Most preferably, the mapping of the phase measurement quantity onto the distance value comprises evaluating the calibration function using the phase measurement quantity as an input of the calibration function.

An aspect of the present invention concerns a range camera configured for operating according to the time-of-flight principle. The range camera comprises

  o an oscillator;

o an illumination unit operatively connected to the oscillator for illuminating, when receiving an oscillating modulation signal, a scene to be imaged with intensity-modulated light,

o an array of lock-in pixels;

o an optical system for imaging a respective part of the scene onto each lock-in pixel by making intensity-modulated light emitted by the illumination unit and scattered in the part of the scene impinge onto the lock-in pixel;

o at least one reference lock-in pixel arranged so as to receive light from the illumination unit via a reference light path; and

o a driver module operatively connected to the oscillator to clock the array of lock-in pixels and the reference lock-in pixel when receiving a copy of the oscillating modulation signal; and

o a processing unit for computing a range image of the scene.

Each lock-in pixel is controllable by the driver module to integrate charge induced therein by the impinging light during at least a first, a second and a third time interval corresponding to at least a first, a second and a third phase of the modulation signal, respectively, and to provide at least at least a first, a second and a third response signal indicative of the charge integrated during the corresponding one of the at least first, second and third time intervals. The processing unit is configured to map the response signals from each pixel onto a phase measurement quantity indicative of a phase difference between the intensity-modulated light impinging onto the lock-in pixel and the modulation signal and to derive a distance value indicative of the distance between each lock-in pixel and the respective part of the scene imaged thereon;

To derive the distance value for each lock-in pixel, the processing unit is configured to compensate for distortions induced in the response signals due to system non-linearities by mapping the phase measurement quantity onto the distance value using a calibration function.

To compute the calibration function, the range camera comprises a phase shifter controllable to sequentially adjust a phase shift between the modulation signal copy received by the driver module and the modulation signal received by the illumination unit to different preset phase-shift values.

The reference lock-in pixel is configured to do the following, under the control of the driver module: for each of the preset values, while the phase shift is adjusted to that phase-shift value, to integrate charge induced in the reference lock-in pixel by the impinging light during at least a first, a second and a third time interval corresponding, respectively, to at least a first, a second and a third phase of the modulation signal copy, and to provide at least at least a first, a second and a third reference response signal indicative of the charge integrated in the reference lock-in pixel during the corresponding one of these time intervals.

The processing unit is configured to map the reference response signals onto a reference phase measurement quantity indicative of a phase difference between the intensity-modulated light impinging onto the reference lock-in pixel and the modulation signal copy and to compute and computing the calibration function based upon the different preset phase-shift values and the reference phase measurement quantities derived for these preset phase-shift values.

The phase shifter may be connected between the oscillator and the driver module or between the oscillator and the illumination unit.

Preferably, the illumination unit comprises one or more LEDs and an LED driver.

The the array of lock-in pixels may be a 1-D or a 2-D array of lock-in pixels.

According to a preferred embodiment of the invention, the at least one reference lock-in pixel may be a plurality of reference lock-in pixels.

Preferably, the range camera comprises a light guide for guiding light from the illumination unit to the at least one reference lock-in pixel. Alternatively, the reference lock-in pixel(s) could be mounted in the illumination unit.

The processing unit is preferably configured to map the phase measurement quantity onto the distance by evaluating the calibration function using the phase measurement quantity as an input.

## Brief Description of the Drawings

Further details and advantages of the present invention will be apparent from the following detailed description of not limiting embodiments with reference to the attached drawings, wherein:

Fig. 1 is a schematic illustration of a range camera according to the prior art, already discussed beforehand;

Fig. 2 is a schematic illustration of a range camera according to a first preferred embodiment of the invention; and

Fig. 3 is a schematic illustration of a range camera according to a second preferred embodiment of the invention;

Fig. 4 is a graph illustrating a possible relationship between the measured reference phase and the preset phase shift.

**Description of Preferred Embodiments**

Fig. 2 schematically shows a range camera 200 according to a first preferred embodiment of the invention. The range camera 200 comprises an oscillator 201, which generates a sinusoidal modulation signal 202 on its output node. The output node of the oscillator 201 is connected to illumination unit 203, comprising an LED driver 204 and an array 205 of LEDs 251. The LED driver 204 amplifies the modulation signal 202 to drive the LEDs 251. When receiving the oscillating modulation signal, the illumination unit 203 emits an intensity-modulated light wave 206 into the scene to be imaged.

The range camera 200 further comprises an array 212 of lock-in pixels 252 and an optical system (illustrated by lens 208) that images the scene onto that array 212. Object 207 in the scene scatters part of the intensity-modulated light back onto the array 212 of lock-in pixels 252. Each lock-in pixel 252 thus receives light from a part of the scene imaged thereon by the optical system. Each lock-in pixel 252 is at the same time fed with a demodulation signal 210, which is provided by photo gate driver 209 (driver module). Each lock-in pixel 252 integrates the charge generated therein by the impinging light during four time intervals of equal lengths, corresponding to four different phases within one period of the modulation signal. These four phases are spaced by 90°. Each lock-in pixel 252 provides response signals 213 (tap responses A0, A1, A2, A3) indicating the integrated charge for the different time intervals.

Calculation module 214 of processing unit 230 maps each set of tap responses A0-A3 onto a phase measurement quantity using the function:

$$\varphi = \operatorname{atan2}(A3 - A1, A2 - A0). \qquad \text{(eqn. 1)}$$

where $\varphi$ represents the phase measurement quantity. In this example, the phase measurement quantity corresponds to the measured phase.

Phase measurement quantity $\varphi$ may contain an error due to system non-linearities. In the absence of these non-linearities, the distance between the lock-in pixel and the part of the scene imaged on it could be calculated by the formula:

$$d = \frac{c\varphi}{4\pi\, f} + d_0 \qquad \text{(eqn. 2)}$$

where d represents the distance, c the speed of light, f the frequency of the modulation and do an offset common to all lock-in pixels.

The processing unit 230 is configured to compensate for distortions induced in the response signals due to system non-linearities by mapping the phase measurement quantity $\varphi$ onto the distance value using a calibration function. This is explained in more detail after the description of the calibration procedure.

To perform the calibration, the range camera comprises a phase shifter 220, which is connected between the oscillator 201 and the photo gate driver 209, a reference lock-in pixel 253 (which has the same structure as the other lock-in pixels 252) and a light guide 217.

In the present example, the calibration procedure is as follows:

Oscillator 201 and illumination unit 203 are switched on. The light guide 217 redirects part of the modulated light 206 emitted by the illumination unit 203 onto the reference lock-in pixel 253. Reference lock-in pixel 253 operates in the same way as the other lock-in pixels. The photo gate driver receives a copy 221 of the modulation signal from the phase shifter 220 and outputs the demodulation signal 210 based upon that copy 221. The phase shift between the modulation signal 202 fed to the illumination unit 203 and its copy 221 is adjustable to different preset phase shift values.

Control unit 216 sequentially sets the phase shift produced by the phase shifter 220 to different values, e.g. 0°, 10°, 20°, ..., 350°. (Other spacings between subsequent phase shift values could be selected, but they should preferably not exceed 30°.)

For each of the set phase shifts, the reference lock-in pixel 253 integrates the charge generated therein by the impinging light during four time intervals of equal lengths, corresponding to four different phases within one period of the modulation signal. These four phases are spaced by 90°. The reference pixel provides reference response signals (tap responses A0, A1, A2, A3) indicating the integrated charge for the different time intervals.

The calculation module 214 then calculates a reference phase measurement quantity for each set of tap responses A0-A3 from the reference lock-in pixel according to the function:

$$\varphi_{REF} = \mathrm{atan2}(A3 - A1, A2 - A0). \qquad \text{(eqn. 3)}$$

where $\varphi_{REF}$ represents the reference phase measurement quantity for the set phase shift. It should be noted that the function used to compute the phase measurement quantity and the corresponding reference quantity is the same (here: atan2()). The control unit 216 records the reference phase measurement quantity 215 of the reference phase sensitive pixel 253 at the output of the calculation unit 214.

The control unit 216 then sets the phase shift to another value and the process is repeated until for each of the preselected phase shifts, a reference phase measurement quantity 215 has been recorded.

In the absence of any system non-linearities, one would have:

$$\varphi_{REF}(\varphi_{SHIFT}) - \varphi_{SHIFT} = \text{constant}, \qquad \text{(eqn. 4)}$$

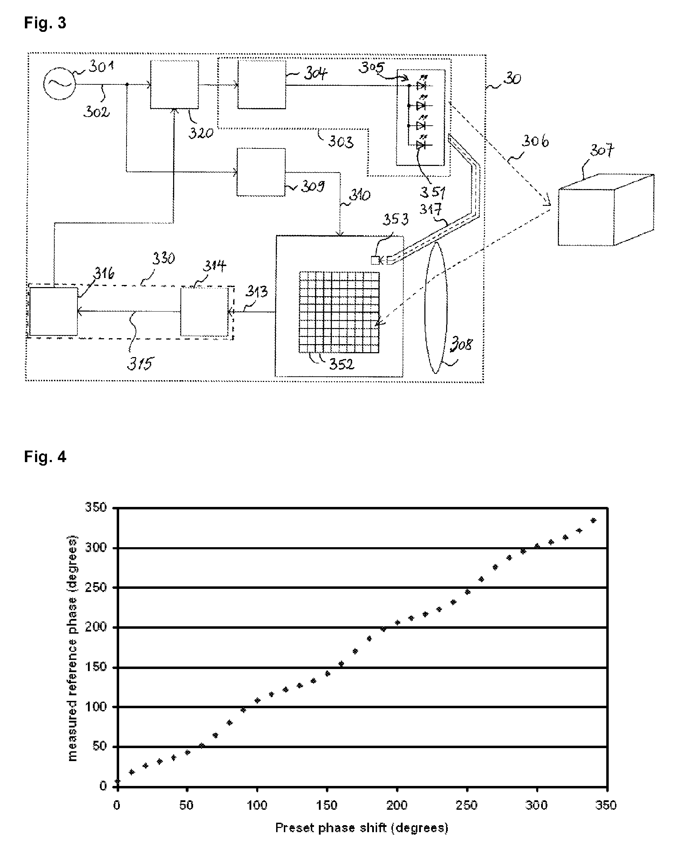

(the constant is independent of the phase shift.) In an actual system, however, one will note discrepancies from this relationship. Fig. 4 gives a simulated example of how the reference phase measurement quantity (vertical axis) may depend upon the adjustable phase shift (horizontal axis).

The control unit 216 collects the preset phase shifts and the corresponding reference phase measurement quantities in a look-up table. In the present example, the look up table is 36 rows deep and two columns wide, each row containing two items. The first item of each row is the known set phase shift and the second item is the corresponding reference phase measurement quantity.

The information contained in the look-up table is used when a range image of a scene is acquired. During this measurement procedure, the phase shift produced by the phase shifter 220 is set to a fixed value, preferably 0. As discussed above, each lock-in pixel 252 of the array 212 gives rise to a phase measurement quantity $\phi$ at the output of calculation module 214. Control unit 216 records these phase measurement quantities.

In order to correct the non-linear errors, control unit 216 looks up the phase measurement quantity of each lock-in pixel in the second column (the column containing the reference phase measurement quantities) of the look-up table established as described above. The corresponding phase shift value in the first column of the look-up table is the corrected phase measurement quantity. As it will not always be possible to find an exact match between a recorded phase measurement quantity and a reference phase measurement quantity stored in the second column of the look-up table, one has to perform some interpolation when carrying out the look-up operations. Preferred types of interpolation are nearest-neighbour look-up, linear interpolation or sin(x)/x interpolation.

The corrected phase measurement quantities are then taken to compute the range image of the scene, i.e. to calculate the distance value for each lock-in pixel 252 of the array 212. This can be done by substituting the corrected phase measurement quantities for $\varphi$ in eqn. 2.

Fig. 3 schematically shows a range camera 300 according to a second preferred embodiment of the invention.

The range camera 300 comprises an oscillator 301, which generates a sinusoidal modulation signal 302 on its output node. The output node of the oscillator 301 is connected to phase shifter 320 and to photo gate driver 309. The copies of the modulation signal 302 fed to the illumination 303 and to the photo gate driver 309, respectively, may thus be phase-shifted with respect to one another by the phase shifter 320. The illumination unit comprises an LED driver 304 and an array 305 of LEDs 351. The LED driver 304 amplifies the received modulation signal to drive the LEDs 351. When receiving the oscillating modulation signal, the illumination unit 303 emits an intensity-modulated light wave 306 into the scene to be imaged.

The range camera 300 further comprises an array 312 of lock-in pixels 352 and an optical system (illustrated by lens 308) that images the scene onto that array 312. Object 307 in the scene scatters part of the intensity-modulated light back onto the array 312 of lock-in pixels 352. Each lock-in pixel 352 thus receives light from a part of the scene imaged thereon by the optical system. Each lock-in pixel 352 is at the same time fed with a demodulation signal 310, which is provided by photo gate driver 309. Each lock-in pixel 352 integrates the charge generated therein by the impinging light during four time intervals of equal lengths, corresponding to four different phases within one period of the modulation signal. These four phases are spaced by 90°. Each lock-in pixel 352 provides response signals 313 (tap responses A0, A1, A2, A3) indicating the integrated charge for the different time intervals.

The calculation module 314 maps each set of tap responses A0-A3 onto a phase measurement quantity (R,S) using the function:

$$R = \frac{A3 - A1}{A2 - A0} \, .$$ 

(eqn. 5)

$$S = \text{sgn}(A3 - A1)$$ 

(eqn. 6)

where sgn represents the sign function. These values R and S are needed to unambiguously reconstruct the phase to be measured. Obviously, there are different ways to compute the value R by exchanging the arguments A0, A1, A2, A3 or to compute the value S by using A2 and A0, for example, as arguments, or other combinations of A0, A1, A2, A3.

The processing unit 330 is configured to compensate for distortions induced in the response signals due to system non-linearities by mapping the phase measurement quantity (R,S) onto the distance value using a calibration function.

In the example of Fig. 3, the calibration procedure is as follows:

Oscillator 301 and illumination unit 303 are switched on. The light guide 317 redirects part of the modulated light 306 emitted by the illumination unit 303 onto the reference lock-in pixel 353. Reference lock-in pixel 353 operates in essentially the same way as the other reference lock-in pixels. The photo gate driver receives a copy of the modulation signal fed to the illumination unit 303 and outputs the demodulation signal 310 based thereupon. The phase shift between the modulation signal fed to the illumination unit 303 and the one fed to the photo gate driver is adjustable to different preset phase shift values.

Control unit 316 sequentially sets the phase shift produced by the phase shifter 320 to different values, e.g. 0°, 10°, 20°, ..., 350°.

For each of the set phase shifts, the reference lock-in pixel 353 integrates the charge generated therein by the impinging light during four time intervals of equal lengths, corresponding to four different phases within one period of the modulation signal. These four phases are spaced by 90°. The reference pixel provides reference response signals (tap responses A0, A1, A2, A3) indicating the integrated charge for the different time intervals.

The calculation module 314 then calculates a reference phase measurement quantity ($R_{REF}$,$S_{REF}$) for each set of tap responses A0-A3 from the reference lock-in pixel according to the function:

$$R_{REF} = \frac{A3 - A1}{A2 - A0} \, .$$ 

$$S_{REF} = \text{sgn}(A3 - A1)$$

The control unit 316 records the reference phase measurement quantities 315 of the reference phase sensitive pixel 353 at the output of the calculation unit 314.

The control unit 316 then sets the phase shift to another value, and the process is repeated until for each of the preselected phase shifts, a reference phase measurement quantity 315 has been recorded.

The control unit 316 collects the preset phase shifts and the corresponding reference phase measurement quantities in a look-up table. In the present example, the look up table is 36 rows deep and three columns wide, each row containing three items. The first item of each row is the known set phase shift, the second item is the corresponding value $R_{REF}$ and the third item the corresponding value $S_{REF}$.

The information contained in the look-up table is used when a range image of a scene is acquired. During the measurement procedure, the phase shift produced by the phase shifter 320 is set to a fixed value, preferably 0. As discussed above, each lock-in pixel 352 of the array 312 gives rise to a phase measurement quantity (R,S) at the output of calculation module 314. Control unit 316 records these phase measurement quantities.

To correct the non-linear errors, control unit 316 looks up the phase measurement quantity (R,S) of each lock-in pixel in the second and third columns (the column containing the reference phase measurement quantities ($R_{REF}$, $S_{REF}$)) of the look-up table established as described above. The corresponding phase shift value in the first column of the look-up table is the corrected phase measurement quantity. As it will not always be possible to find an exact match between a recorded phase measurement quantity (R,S) and a reference phase measurement quantity ($R_{REF}, S_{REF}$) stored in the second column of the look-up table, one has to perform some interpolation when carrying out the look-up operations. Preferred types of interpolation are again nearest-neighbour look-up, linear interpolation or sin(x)/x interpolation.

This second embodiment has the advantage that no atan() or atan2() operation needs to be performed in the system, thereby eliminating a computationally complex operation. As in the previous example, the corrected phase measurement quantities are the preset phase shifts, which may be used to compute the range image of the scene, i.e. to calculate the distance value for each lock-in pixel 352 of the array 312. This can again be done by substituting the corrected phase measurement quantities for φ in eqn. 2.

It shall be noted that the calibration function need not necessarily be implemented by means of a look-up table. As an alternative, the control unit could e.g. determine from the recorded reference phase measurement quantities the parameters of a polynomial expression or other mathematical function that correct for system non-linearities. The use of a look-up table may, however, be computationally more efficient.

The preferred embodiments illustrated in Fig. 2 and 3, respectively, contain a single reference lock-in pixel 253, 353. However, it is also possible to use a plurality of reference lock-in pixels, which all receive modulated light wave from light guide 217, 317 and which operate in parallel. In this case, the measurement noise and/or accuracy and/or reliability can be improved by calculating the mean or median value of the reference phase measurement quantities of the plural reference lock-in pixels.

The phase shifters 220, 320 could be digital phase shifters comprising a shift register clocked at a multiple of the modulation frequency. Alternatively they could comprise a PLL (phase locked loop) whereby the output frequency is the same as the input frequency, which is equal to the modulation frequency. The phase shift between the inputs signal and the output signal of a PLL is controlled for example by injecting a known current into the summing node of the error amplifier of the PLL. In case of a shift register, the phase shift is set by a digital control word provided by control unit 216 or 316. In case of a PLL, the phase shift may be set by an analog signal provided at an analog output of the control unit 216 or 316. Such analog signal can e.g. be a DAC (digital to analog converter) signal or a filtered PWM (pulse width modulation) signal.

The processing units 230 and 330 are preferably implemented as application-specific integrated circuits (ASICs), field-programmable gate arrays (FPGAs), digital signal processors (DSPs) or microprocessors. Control units 216, 316 and calculation modules 214, 314 need not necessarily be separated sub-units of the processing units; they can also be integrated in a single sub-unit performing both functions.

As a final remark, if the preset phase-shifts are equidistant or their distribution over the cycle is known, the first column of the look-up table may be omitted, since one could retrieve the preset phase-shift from the index (in this case the row number) of the best match or the best matches identified in the column containing the measured reference phase measurement quantities. Accordingly, the look-up tables could be implemented with a single column or row.

## Claims

1. A method of acquiring a range image of a scene with a range camera operating according to the time-of-flight principle, said range camera comprising an illumination unit, an array of lock-in pixels, an optical system for imaging said scene onto said array of lock-in pixels, and at least one reference lock-in pixel for receiving light from said illumination unit via a reference light path, said method comprising a measurement procedure, said measurement procedure including:

   feeding an oscillating modulation signal to said illumination unit to cause said illumination unit to illuminate said scene with intensity-modulated light;
   imaging a part of said scene onto a lock-in pixel by making intensity-modulated light emitted by said illumination unit and scattered in said part of the scene impinge onto said lock-in pixel;
   integrating charge induced in said lock-in pixel by said impinging light during at least a first, a second and a third time interval corresponding to at least a first, a second and a third phase of said modulation signal, respectively, and providing at least at least a first, a second and a third response signal indicative of the charge integrated during the corresponding one of said at least first, second and third time intervals;
   mapping said response signals onto a phase measurement quantity indicative of a phase difference between the intensity-modulated light impinging onto said lock-in pixel and said modulation signal; and
   deriving a distance value indicative of the distance between said lock-in pixel and the part of the scene imaged thereon;

   **characterized in that**

said deriving of a distance value comprises compensating for distortions induced in said response signals due to system non-linearities by mapping said phase measurement quantity onto said distance value using a calibration function;

and **in that** said method comprises a calibration procedure, said calibration procedure including:

illuminating said reference lock-in pixel with light travelling via said reference light path from said illumination unit to said reference lock-in pixel;

clocking said reference lock-in pixel using a copy of said oscillating modulation signal, said modulation signal copy having an adjustable phase shift with respect to said oscillating modulation signal;

sequentially adjusting said phase shift to different preset phase-shift values; for each of said preset values:

while said phase shift is adjusted to that phase-shift value, integrating charge induced in said reference lock-in pixel by said impinging light during at least a first, a second and a third time interval corresponding, respectively, to at least a first, a second and a third phase of said modulation signal copy, and providing at least at least a first, a second and a third reference response signal indicative of the charge integrated in said reference lock-in pixel during the corresponding one of these time intervals;

mapping said reference response signals onto a reference phase measurement quantity indicative of a phase difference between the intensity-modulated light impinging onto said reference lock-in pixel and said modulation signal copy;

and computing said calibration function based upon said different preset phase-shift values and the reference phase measurement quantities derived for these preset phase-shift values.

2. The method according to claim 1, wherein the different preset phase-shift values are distributed over a full cycle.

3. The method according to claim 2, wherein the different preset phase-shift values are regularly distributed over a full cycle.

4. The method according to claim 1, 2 or 3, wherein said computed calibration function is implemented so as to map each reference phase measurement quantity to the preset phase-shift value for which that reference phase measurement quantity has been derived.

5. The method according to claim 4, wherein said calibration function is implemented by means of a look-up table.

6. The method according to claim 4 or 5, wherein said mapping of the phase measurement quantity onto said distance value comprises evaluating said calibration function using said phase measurement quantity as an input.

7. A range camera configured for operating according to the time-of-flight principle, comprising:

an oscillator;
an illumination unit operatively connected to said oscillator for illuminating a scene to be imaged with intensity-modulated light when receiving an oscillating modulation signal,
an array of lock-in pixels;
an optical system for imaging a respective part of said scene onto each lock-in pixel by making intensity-modulated light emitted by said illumination unit and scattered in said part of the scene impinge onto said lock-in pixel;
at least one reference lock-in pixel arranged so as to receive light from said illumination unit via a reference light path; and
a driver module operatively connected to said oscillator to clock said array of lock-in pixels and said reference lock-in pixel when receiving a copy of said oscillating modulation signal,
a processing unit for computing a range image of said scene;
wherein each lock-in pixel is controllable by said driver module to integrate charge induced therein by said impinging light during at least a first, a second and a third time interval corresponding to at least a first, a second and a third phase of said modulation signal, respectively, and to provide at least at least a first, a second and a third response signal indicative of the charge integrated during the corresponding one of said at least first, second and third time intervals;
wherein said processing unit is configured to map the response signals from each pixel onto a phase measurement quantity indicative of a phase difference between the intensity-modulated light impinging onto said lock-in pixel and said modulation signal; and to derive a distance value indicative of the distance between each lock-in pixel and the respective part of the scene imaged thereon;

**characterized in that**

to derive said distance value for each lock-in pixel, said processing unit is configured to compensate for distortions induced in said response signals due to system non-linearities by mapping said phase measurement quantity onto said distance value using a calibration function;

**in that** said range camera comprises

a phase shifter controllable to sequentially adjust a phase shift between said modulation signal copy received by said driver module and the modulation signal received by said illumination unit to different preset phase-shift values;

**in that** said reference lock-in pixel is controllable by said driver module,

to integrate, while said phase shift is adjusted to one of said phase-shift values, charge induced in said reference lock-in pixel by said impinging light during at least a first, a second and a third time interval corresponding, respectively, to at least a first, a second and a third phase of said modulation signal copy, and to provide at least at least a first, a second and a third reference response signal indicative of the charge integrated in said reference lock-in pixel during the corresponding one of these time intervals;

**in that** said processing unit is configured

to map said reference response signals onto a reference phase measurement quantity indicative of a phase difference between the intensity-modulated light impinging onto said reference lock-in pixel and said modulation signal copy and to compute and computing said calibration function based upon said different preset phase-shift values and the reference phase measurement quantities derived for these preset phase-shift values.

8. The range camera according to claim 7, wherein said phase shifter is connected between said oscillator and said driver module.

9. The range camera according to claim 7, wherein said phase shifter is connected between said oscillator and said illumination unit.

10. The range camera according to any one of claims 7 to 9, wherein said illumination unit comprises one or more LEDs and an LED driver.

11. The range camera according to any one of claims 7 to 10, wherein said array of lock-in pixels is a 2-D or a 3-D array of lock-in pixels.

12. The range camera according to any one of claims 7 to 11, wherein said at least one reference lock-in pixel is a plurality of reference lock-in pixels.

13. The range camera according to any one of claims 7 to 12, comprising a light guide for guiding light from said illumination unit to said at least one reference lock-in pixel.

14. The range camera according to any one of claims 7 to 13, wherein said processing unit is configured to map said phase measurement quantity onto said distance by evaluating said calibration function using said phase measurement quantity as an input.

**Fig. 1 (PRIOR ART)**

**Fig. 2**

**Fig. 3**

**Fig. 4**

Europäisches
Patentamt
European
Patent Office
Office européen
des brevets

## EUROPEAN SEARCH REPORT

Application Number

EP 09 16 1959

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | KAHLMANN T ET AL: "Calibration of the fast range imaging camera SwissRanger(TM) for the use in the surveillance of the environment" PROCEEDINGS OF SPIE - THE INTERNATIONAL SOCIETY FOR OPTICAL ENGINEERING - ELECTRO-OPTICAL REMOTE SENSING II 2006 SPIE US, vol. 6396, 2006, XP002539116 * sections 2.1, 4.1 * | 1-12,14 | INV. G01S7/497 G01S17/89 G01S17/36 |
| Y | WO 2008/005516 A (CANESTA INC; BAMJI CYRUS [US]; YALCIN HAKAN [US]) 10 January 2008 (2008-01-10) * abstract * * paragraphs [0008], [0019], [0051], [0053], [0054], [0058] * | 1-12,14 | |
| Y | KAHLMANN, TIMO AND INGENSAND, HILMAR: "Calibration and development for increased accuracy of 3D range imaging cameras" JOURNAL OF APPLIED GEODESY, vol. 2, no. 1, April 2008 (2008-04), XP007909326 * abstract * * sections 2.2.4, 2.2.5, 3 * | 1-12,14 | |
| A,D | WO 2008/034738 A (IEE SARL [LU]; CAUQUY MARIE-ASTRID [FR]; LAMESCH LAURENT [LU]) 27 March 2008 (2008-03-27) | | TECHNICAL FIELDS SEARCHED (IPC) G01S |
| A,D | DE 44 39 298 A1 (SCHWARTE RUDOLF PROF DR ING [DE]) 13 June 1996 (1996-06-13) | | |

The present search report has been drawn up for all claims

| Place of search | Date of completion of the search | Examiner |
|---|---|---|
| Munich | 29 July 2009 | Grübl, Alexander |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 2 264 481 A1**

## ANNEX TO THE EUROPEAN SEARCH REPORT
## ON EUROPEAN PATENT APPLICATION NO.

EP 09 16 1959

This annex lists the patent family members relating to the patent documents cited in the above-mentioned European search report.
The members are as contained in the European Patent Office EDP file on
The European Patent Office is in no way liable for these particulars which are merely given for the purpose of information.

29-07-2009

| Patent document cited in search report | | Publication date | Patent family member(s) | | Publication date |
|---|---|---|---|---|---|
| WO 2008005516 | A | 10-01-2008 | EP<br>US<br>US | 2038815 A2<br>2009115995 A1<br>2008007709 A1 | 25-03-2009<br>07-05-2009<br>10-01-2008 |
| WO 2008034738 | A | 27-03-2008 | EP<br>EP | 1903299 A1<br>2074377 A1 | 26-03-2008<br>01-07-2009 |
| DE 4439298 | A1 | 13-06-1996 | NONE | | |

For more details about this annex : see Official Journal of the European Patent Office, No. 12/82

15

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1152261 A1
- WO 9810255 A
- DE 4439298
- WO 2006097406 A
- WO 2008034738 A